**Europäisches Patentamt**

**European Patent Office**

**Office européen des brevets**

(11) Veröffentlichungsnummer: **0 320 707**
**A1**

## (12) EUROPÄISCHE PATENTANMELDUNG

(21) Anmeldenummer: **88120086.9**

(22) Anmeldetag: **01.12.88**

(51) Int. Cl.⁴: **F02P 5/15**

(30) Priorität: **16.12.87 DE 3742668**

(43) Veröffentlichungstag der Anmeldung:
**21.06.89 Patentblatt 89/25**

(84) Benannte Vertragsstaaten:
**DE ES FR GB IT**

(71) Anmelder: **Siemens Aktiengesellschaft Berlin und München**
**Wittelsbacherplatz 2**
**D-8000 München 2(DE)**

(72) Erfinder: **Schultes, Helmut, Dipl.-Inform. (FH)**
**Ölbergstrasse 12a**
**D-8411 Grünthal(DE)**

(54) **Anordnung zur Stabilisierung der Leerlaufdrehzahl einer Brennkraftmaschine.**

(57) Bei einer Anordnung zur Frühverstellung des Zündwinkels mit einem Mikrorechner (21) ist ein Zeitglied (22) vorgesehen, das auf eine Ablaufzeit (t) eingestellt ist, die eine Sollzeit ist, die die Kurbelwelle braucht, um sich von einem willkürlich gewählten Grundwinkel (GW) bei einer Soll-Leerlaufdrehzahl bis zu einem zugehörigen Leerlaufwinkel (LW) zu drehen, der der Zündwinkel bei der Soll-Leerlaufdrehzahl ist. Das Zeitglied (22) wird gestartet, wenn die Winkellage der Kurbelwelle den Grundwinkel (GW) erreicht hat. Die Winkellage der Kurbelwelle nach der Ablaufzeit (t) ist ein Frühwinkel (FW), der als Zündwinkel verwendet wird, der mit sinkender Leerlaufdrehzahl immer früher liegt. Die Anordnung gewährleistet eine unmittelbare Frühverstellung des Zündwinkels bei einem Leerlaufdrehzahleinbruch ohne direktes Zutun des Mikrorechners (21).

EP 0 320 707 A1

**FIG 3**

## Anordnung zur Stabilisierung der Leerlaufdrehzahl einer Brennkraftmaschine

Die Erfindung betrifft eine Anordnung zur Stabilisierung der Leerlaufdrehzahl einer Brennkraftmaschine durch Frühverstellung des Zündwinkels gemäß Oberbegriff von Anspruch 1.

Eine solche Frühverstellung des Zündwinkels ist z.B. in der DE-OS 30 08 232 beschrieben. Ein Mikrorechner bestimmt dabei den Zündwinkel in Abhängigkeit von Parametern, wie der Drehzahl der Brennkraftmaschine.

Beim Einsatz von Mikrorechnern in Motorsteuergeräten zur Berechnung des Zündwinkels für jeden Zylinder einer Brennkraftmaschine besteht das Problem der Rechengeschwindigkeit. Je höher die Drehzahl der Brennkraftmaschine ist, je mehr Zylinder sie hat und je mehr Funktionen die Motorsteuerung erfüllen soll, desto weniger Zeit bleibt dem Mikrorechner zwischen zwei Zündungen, um jeweils den optimalen Zündwinkel zu bestimmen. Dieses Problem ist in jedem Fall gegeben, gleich, ob der Mikrorechner den Zündwinkel vor jeder Zündung berechnet oder ihn aus einem Kennfeld entnimmt.

Um den Mikrorechner zeitlich zu entlasten kann die Bestimmung des Zündwinkels statt für jede einzelne Zündung z.B. nur für jede vierte Zündung durchgeführt werden. Die Zündungen zwischen zwei Berechnungen haben dann alle den gleichen Zündwinkel, der unter Umständen nicht optimal ist. Diese Vorgehensweise ist daher in Betriebsbereichen der Brennkraftmaschine, die eine sehr schnelle Anpassung des Zündwinkels erfordern, weniger geeignet. Bei einem durch eine plötzliche Lasterhöhung verursachten Einbruch der Drehzahl im Leerlauffall der Brennkraftmaschine beispielsweise ist eine Frühverstellung des Zündwinkels möglichst bereits bei der nächstfolgenden Zündung notwendig, um ein Absterben zu verhindern.

In diesem Fall besteht also nur die Möglichkeit, entweder einen entsprechend schnellen und damit teuren Mikrorechner zu verwenden oder eine weniger optimale Leerlaufstabilisierung in Kauf zu nehmen.

Die Aufgabe der Erfindung besteht deshalb darin, eine Anordnung zur Stabilisierung der Leerlaufdrehzahl mit einem Mikrorechner derart auszulegen, daß auch ein einfacher Standardmikrorechner ausreichend ist. Trotzdem soll eine Frühverstellung des Zündwinkels bei jedem Einbruch der Drehzahl unmittelbar bei der nächstfolgenden Zündung bewirkt werden.

Die erfindungsgemäße Lösung ist im Anspruch 1 gekennzeichnet. Vorteilhafte Weiterbildungen der Erfindung finden sich in den Unteransprüchen.

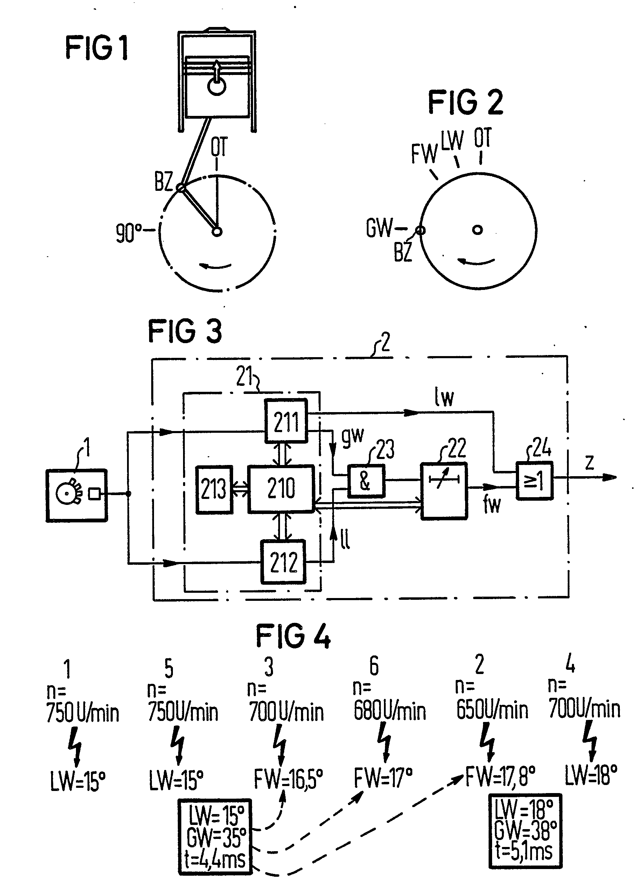

Jede der folgenden Winkelangaben - vgl. FIG 1 und 2 - bezeichnet eine bestimmte Winkellage eines Bezugspunkts BZ auf der Kurbelwelle z. B. des Befestigungspunktes eines Pleuels bezüglich eines ortsfesten Referenzpunktes OT, wobei der Bezugspunkt BZ die Winkellage 0˚ hat, wenn der Kolben seine OT-Stellung (oberer Totpunkt), erreicht. Die Winkelangaben zählen von dem Referenzpunkt OT entgegen der in FIG 1 eingezeichneten Drehrichtung der Kurbelwelle in Grad.

Die Grundidee der Erfindung basiert auf der Überlegung, daß der Bezugspunkt BZ der Kurbelwelle bei einer gegebenen Soll-Leerlaufdrehzahl eine Sollzeit benötigt, um sich von einem willkürlich gewählten, fest vorgegebenen Grundwinkel GW bis zu einem für diese Soll-Leerlaufdrehzahl festgelegten Leerlaufwinkel LW zu drehen, der der Zündwinkel bei der Soll-Leerlaufdrehzahl ist. Dementsprechend beginnt die Sollzeit, wenn der Bezugspunkt den Grundwinkel GW passiert. Sinkt die Drehzahl gegenüber der Soll-Leerlaufdrehzahl, so wird der Bezugspunkt BZ nach Ablauf der Sollzeit den Leerlaufwinkel LW nicht mehr erreichen, sondern nur einen Frühwinkel FW zwischen dem Grundwinkel GW und dem Leerlaufwinkel LW einnehmen. Dieser Frühwinkel FW liegt mit abnehmender Drehzahl immer weiter vor dem Leerlaufwinkel LW in Richtung auf den Grundwinkel GW. Zündet man daher immer nach Ablauf der Sollzeit, d.h. mit dem Frühwinkel FW als Zündwinkel, so ergibt sich mit gegenüber der Soll-Leerlaufdrehzahl abnehmender Drehzahl ein immer früher liegender Zündwinkel, der der Drehzahlabnahme entgegenwirkt.

Erfindungsgemäß ist für diese Funktion ein einstellbares Zeitglied vorgesehen, dessen Ablaufzeit diese Sollzeit ist. Die Differenz zwischen dem Leerlaufwinkel und dem Grundwinkel ist aus Versuchen ermittelt und so gewählt, daß eine für den Motor optimale Dynamik des Frühwinkels FW resultiert. Die Ablaufzeit des Zeitglieds und den Grundwinkel GW berechnet ein Mikrorechner, der auch die Soll-Leerlaufdrehzahl und den dazugehörigen Leerlaufwinkel in einem Kennfeldspeicher abgelegt hat.

Sollte die Drehzahl gegenüber der Soll-Leerlaufdrehzahl ansteigen, so würde die vorbeschriebene Anordnung den Zündwinkel in unerwünschter Weise nach "Spät" verschieben. Deshalb ist eine Logikschaltung vorgesehen, der Leerlaufwinkel LW und der von der Anordnung erzeugte Frühwinkel FW zugeführt sind, die den zeitlich früheren der beiden als Zündwinkel zur Wirkung kommen läßt. Dadurch ist im Leerlauf kein zeitlich nach dem Leerlaufwinkel LW liegender Zündwinkel möglich.

Für die erfindungsgemäße Lösung muß die Ablaufzeit nur einmal für eine Soll-Leerlaufdrehzahl und den dazugehörigen Leerlaufwinkel LW berechnet werden. Bei allen folgenden Zündungen findet dann bei einem eventuellen Drehzahleinbruch automatisch eine Frühverstellung des Zündwinkels statt. Bei einer vorteilhaften Weiterbildung der Erfindung bestimmt der Mikrorechner trotzdem von Zeit zu Zeit einen neuen Leerlaufwinkel LW für die gerade vorhandene Drehzahl aus dem Kennfeld und berechnet eine entsprechende neue Ablaufzeit und einen neuen Grundwinkel GW. Da durch wird die von der Anordnung vorgegebene Frühverstellung des Zündwinkels immer wieder durch einen aus dem Kennfeld gewonnenen Leerlaufwinkel LW neu normiert. Wie oft, d.h. bei jeder wievielten Zündung, diese Neuberechnung durchgeführt wird, hängt von der Auslegung der Brennkraftmaschine sowie den Fähigkeiten des Mikrorechners ab. In jedem Fall hat der Mikrorechner sehr viel Zeit für jede Neuberechnung, da er diese nur bei jeder x-ten Zündung durchführen muß. Trotzdem ist durch die vorbeschriebene Anordnung eine von Zündung zu Zündung unmittelbare Frühverstellungsmöglichkeit des Zündwinkels gegeben.

Die Erfindung wird anhand der Figuren näher erläutert; es zeigen:

FIG 3 ein Blockschaltbild einer erfindungsgemäßen Anordnung und

FIG 4 ein schematisches Zündablaufdiagramm am Beispiel einer 6-Zylindermaschine.

In FIG 3 ist eine Geberanordnung 1 dargestellt, die einen rotierenden und einen feststehenden Teil hat. Der rotierende Teil ist mit der Kurbelwelle einer Brennkraftmaschine verbunden und trägt Markierungen, die der feststehende Teil abtastet. Die Geberanordnung 1 erzeugt Gebersignale, die die Information über die Drehzahl der Kurbelwelle und damit der Brennkraftmaschine und über die Winkellage eines Bezugspunkts BZ auf der Kurbelwelle enthalten. Eine solche Geberanordnung 1 ist z.B. in der US-Patentschrift 4 121 112 (Hartig) beschrieben.

Die Gebersignale sind einem Motorsteuergerät 2 zugeführt, das daraus ein Zündsignal z ableitet, das eine in FIG 3 nicht dargestellte Zündungsendstufe ansteuert. Das Motorsteuergerät 2 enthält für die Zündungsfunktionen als wesentliche Komponenten einen Mikrorechner 21, ein einstellbares Zeitglied 22 sowie eine Logikschaltung bestehend aus einem UND-Glied 23 und einem ODER-Glied 24.

Der Mikrorechner 21 ist nur teilweise durch einige für die Erfindung wichtige Funktionsblöcke dargestellt. Eine Zentraleinheit 210 ist dabei mit einer Winkeleinheit 211 und einer Drehzahleinheit 212 sowie einem Kennlinienspeicher 213 verbunden.

Die Winkeleinheit 211 bestimmt aus den von der Geberanordnung 1 kommenden Gebersignalen die jeweilige Winkellage des Bezugspunkts BZ. Sie vergleicht laufend diese Winkellage mit von der Zentraleinheit 210 vorgegebenen Werten für einen Grundwinkel GW und einen Leerlaufwinkel LW. Wenn die Winkellage des Bezugspunkts BZ diesen Werten entspricht, erzeugt die Winkeleinheit 211 an einem Ausgang ein Grundwinkelsignal gw und an einem anderen Ausgang ein Leerlaufwinkelsignal lw.

Die Drehzahleinheit 212 bestimmt aus den von der Geberanordnung 1 kommenden Gebersignalen die Drehzahl der Kurbelwelle und gibt diese an die Zentraleinheit 210 weiter. Sie vergleicht außerdem diese Drehzahl mit einem Drehzahlband von 500 bis 1000 Umdrehungen pro Minute. Liegt die Drehzahl in diesem Drehzahlband, so gibt sie an einem Ausgang ein Leerlaufsignal ll ab.

In dem Kennlinienspeicher 213 sind die Werte des Leerlaufwinkels LW für die Drehzahlen der Brennkraftmaschine im Leerlaufbetrieb abgelegt.

Es sei nun angenommen, daß die Brennkraftmaschine im Leerlaufbetrieb ist und eine bestimmte Soll-Leerlaufdrehzahl erreicht hat. Die Zentraleinheit 210 erhält den Wert für diese Soll-Leerlaufdrehzahl von der Drehzahleinheit 212 und liest dann den zugehörigen Leerlaufwinkel LW aus dem Kennlinienspeicher 213 aus. Der Grundwinkel GW ist dann dieser Leerlaufwinkel LW plus einem konstanten Wert K. Dieser konstante Wert K ist empirisch ermittelt und variiert bei verschiedenen Brennkraftmaschinen Es gilt also:

(1) $\quad GW = LW + K$

Die Zentraleinhet (210) berechnet nun eine Sollzeit ts, die der Bezugspunkt BZ braucht, um sich bei der Soll-Leerlaufdrehzahl von dem Grundwinkel GW bis zu dem Leerlaufwinkel LW zu drehen. Für diese Zeit gilt:

(2) $\quad ts = \frac{1}{n} \times K$,

wobei n = Drehzahl der Kurbelwelle
ts = Sollzeit

Die Zentraleinheit 210 ist über eine Wirkverbindung mit dem einstellbaren Zeitglied 22 verbunden. Sie stellt die Ablaufzeit dieses Zeitglieds 22 auf die oben berechnete Sollzeit ts ein. Das Zeitglied 22 wird von dem UND-Glied 23 angestoßen, wenn an dessen Eingängen die UND-Bedingung erfüllt ist, d.h. das Grundwinkelsignal gw und das Leerlaufsignal ll anstehen. In diesem Fall liegt also Leerlaufbetrieb der Brennkraftmaschine vor und der Bezugspunkt BZ hat den Grundwinkel GW erreicht. Das Zeitglied 22 läuft nun ab und erzeugt nach seiner Ablaufzeit t am Ausgang ein Frühwinkelsignal fw, das über das ODER-Glied 24 direkt zum Zündsignal z wird.

Das ODER-Glied 24 erhält an einem zweiten Eingang das Leerlaufwinkelsignal lw von der Winkeleinheit 211. Dasjenige der beiden Signale, Leerlaufwinkelsignal lw oder Frühwinkelsignal fw, das zuerst an dem ODER-Glied 24 ansteht, führt also zum Zündsignal z. In der nachfolgenden Zündendstufe wird nur dieses erste Signal verarbeitet und das später folgende kommt nicht zur Wirkung.

Die Funktion wird anhand eines schematischen Zündablaufdiagramms gemäß FIG 4 erläutert. Es ist dabei ein 6-Zylinderreihenmotor angenommen, mit einer in FIG 4 in der obersten Zeile angegebenen Zündfolge 1, 5, 3, 6, 2, 4. In der Zeile darunter ist ein fiktives Beispiel für einen Drehzahlverlauf angegeben. Bei allen sechs Zündungen ist angenommen, daß sich die Brennkraftmaschine im Leerlauf befindet.

Bei der Zündung des Zylinders 1 liegt eine Soll-Leerlaufdrehzahl von 750 Umdrehungen pro Minute vor und ein zugehöriger Leerlaufwinkel LW von 15˚. Diese Verhältnisse bleiben bei der Zündung des nächsten Zylinders 5 noch gleich. Danach erfolgt eine Neuberechnung durch den Mikrorechner 21:
- Aus dem Kennlinienspeicher 213 ergibt sich ein Leerlaufwinkel LW für die Soll-Leerlaufdrehzahl von 750 Umdrehungen pro Minute von 15˚;
- der Grundwinkel GW ist dann dieser Leerlaufwinkel LW plus dem Konstantwert K von hier 20˚, also 35˚;
- die Ablaufzeit t ergibt sich aus Gleichung (2) zu 4,4 ms.

Bei der Zündung des Zylinders 3 ist die Drehzahl auf 700 Umdrehungen pro Minute gesunken. Das Zeitglied 22 ist also bereits abgelaufen, bevor der Leerlaufwinkel LW erreicht wird. Das Frühwinkelsignal fw liegt damit zeitlich vor dem Leerlaufwinkelsignal lw und führt zum Zündsignal z. Dieser Frühwinkel FW entsteht nach der einmaligen Berechnung der Ablaufzeit t des Zeitglieds 22 ohne weiteres Zutun des Mikrorechners 21. Lediglich das Zeitglied 22 und die Logikschaltung aus dem UND-Glied 23 und dem ODER-Glied 24 bewirken also diese Frühverstellung. Wie groß dieser von der Anordnung eingestellte Frühwinkel FW ist, kann durch eine Rechnung nachvollzogen werden:
Der Frühwinkel FW muß gleich sein dem Grundwinkel GW abzüglich dem Winkelbereich um den sich der Bezugspunkt BZ während der Ablaufzeit t mit der neuen Drehzahl weiterbewegt, also
$FW = GW - t \times ne = 16,5˚$.
ne = neue Drehzahl

Bei der Zündung des Zylinders 6 und nochmals gesunkener Drehzahl auf 680 Umdrehungen pro Minute ergibt sich dementsprechend ein Frühwinkel FW von 17˚. Beim folgenden Zylinder 2 und 650 Umdrehungen pro Minute ist der Frühwinkel FW schließlich 17,8˚.

Nach dieser Zündung erfolgt wieder eine Neuberechnung durch den Mikrorechner 21. Mit einer Drehzahl von 650 Umdrehungen pro Minute ergeben sich ein Leerlaufwinkel LW von 18˚, daraus ein Grundwinkel GW von 38˚ und eine Ablaufzeit t von 5,1 ms. An diesem Beispiel sieht man auch die richtige Dimensionierung von K, da der Übergang von den zuletzt von der Anordnung erzeugten Frühwinkel FW von 17,8˚ zu dem neuen Leerlaufwinkel LW von 18˚ aus dem Kennlinienspeicher 213 stetig erfolgt, d.h. ohne sprunghafte Veränderung des Winkelwerts.

Diese Neuberechnung hat den Sinn, daß die von der Anordnung erzeugten Frühwinkel FW immer wieder auf der Basis neuer Leerlaufwinkel LW aus dem Kennlinienspeicher 213 gebildet werden. Dies deshalb, da die Werte in dem Kennlinienspeicher 213 am optimalsten auf die Bedürfnisse der Brennkraftmaschine ausgelegt sind. Die Schnelligkeit des Auslesevorgangs spielt dabei keine wesentliche Rolle, da schnell erforderliche Zündwinkeländerungen in der beschriebenen Weise von der Anordnung ausgeführt werden.

Bei der Zündung des Zylinders 4 ist die Drehzahl wieder auf 700 Umdrehungen pro Minute gestiegen. Das Zeitglied 22 läuft dementsprechend erst nach dem Leerlaufwinkel LW ab und die Zündung erfolgt dementsprechend mit Erreichen dieses Leerlaufwinkels LW.

## Ansprüche

1. Anordnung zur Stabilisierung der Leerlaufdrehzahl einer Brennkraftmaschine durch Frühverstellung des Zündwinkels,
- mit einer rotierenden Geberanordnung (1), die der Drehzahl der Brennkraftmaschine proportionale Gebersignale liefert,
- mit einem Motorsteuergerät (2), das einen Mikrorechner (21) enthält, dem die Gebersignale zugeführt sind und das daraus einen Frühwinkel (FW) als Zündwinkel für eine bestimmte Leerlaufdrehzahl der Brennkraftmaschine bildet,
**dadurch gekennzeichnet,**
daß das Motorsteuergerät (2) ein einstellbares Zeitglied (22) enthält,
- dessen Ablaufzeit (t) auf eine Sollzeit eingestellt ist, die ein Bezugspunkt (BZ) auf der Kurbelwelle bei einer festgelegten Soll-Leerlaufdrehzahl benötigt, um sich von einem Grundwinkel (GW) bis zu einem festgelegten Leerlaufwinkel (LW) zu drehen, der der Zündwinkel bei der Soll-Leerlaufdrehzahl ist,
daß das Zeitglied (22) abzulaufen beginnt, wenn der Bezugspunkt (BZ) den Grundwinkel (GW) erreicht hat, und
daß das Zündsteuergerät (2) eine Logikschaltung enthält, die im Leerlauf der Brennkraftmaschine einen Frühwinkel (FW), der die Winkellage des Bezugspunkts (BZ) nach der Ablaufzeit (t) ist, als Zündwinkel verwendet, wenn dieser Frühwinkel (FW) zeitlich vor dem Leerlaufwinkel (LW) erreicht wird und sonst den Leerlaufwinkel (LW) als Zündwinkel verwendet.

2. Anordnung nach Anspruch 1,
**dadurch gekennzeichnet,**
daß die Ablaufzeit (t) das Produkt aus der reziproken Drehzahl und der Differenz zwischen Leerlaufwinkel (LW) und Grundwinkel (GW) ist.

3. Anordnung nach Anspruch 2,
**dadurch gekennzeichnet,**
daß die Ablaufzeit (t) und der Grundwinkel (GW) jeweils nach x Zündungen auf der Basis einer neuen Leerlaufdrehzahl und einem zugehörigen neuen Leerlaufwinkel (LW) neu bestimmt wird.

4. Anordnung nach Anspruch 1,
**dadurch gekennzeichnet,**
daß die Logikschaltung ein UND-Glied (24) und ein ODER-Glied (26) enthält.

FIG 1

FIG 2

FIG 3

FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 123 002 (RENAULT) * Seite 9, Zeile 1 - Seite 10, Zeile 21; Seite 2, Zeilen 13-27; Seite 7, Zeile 1 - Seite 8, Zeile 19; Figuren 3,5-7 * --- | 1-3 | F 02 P 5/15 |
| A | PATENT ABSTRACTS OF JAPAN, Band 11, Nr. 28 (M-557)[2475], 27. Januar 1987, Seite 151 M 557; & JP-A-61-201 883 (JAPAN ELECTRONIC CONTROL SYSTEM CO. LTD) 06-09-1986 --- | 1 | |
| A | FR-A-2 454 526 (NISSAN MOTOR CO.) * Figuren 2,5-7,9; Seite 11, Zeile 33 - Seite 13, Zeile 21 * --- | 1 | |
| A | US-A-4 696 272 (KATO et al.) ----- | | |
| | | | **RECHERCHIERTE SACHGEBIETE (Int. Cl.4)** F 02 P |

Der vorliegende Recherchenbericht wurde für alle Patentansprüche erstellt

| Recherchenort | Abschlußdatum der Recherche | Prüfer |
|---|---|---|
| DEN HAAG | 03-03-1989 | LEROY C.P. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument